# EUROPEAN PATENT SPECIFICATION

(11) **EP 3 410 866 B1**
(45) Date of publication and mention of the grant of the patent: **30.12.2020**
(21) Application number: 17702885.9
(22) Date of filing: 03.02.2017
(51) Int. Cl.: A23C 11/00, A23C 11/02, A23C 11/08

(54) **CREAMER COMPOSITION**
WEISSERZUSAMMENSETZUNGEN
COMPOSITIONS DE CRÉMIER

(30) Priority: 04.02.2016 EP 16154267
(43) Date of publication of application: 12.12.2018
(73) Proprietor: Société des Produits Nestlé S.A., 1800 Vevey (CH)
(72) Inventor: LESER, Martin, 1053 Bretigny-sur-Morrens (CH); STUDER, Marianne, 1054 Morrens (CH); PIPE, Christopher, James, 1006 Lausanne (CH); LORET, Chrystel, 1012 Lausanne (CH); REH, Christoph, 1066 Epalinges (CH); WAKSMAN, Lucile, 3012 Bern (CH); HEINE, Manuel, 3510 Konolfingen (CH); FRIES, Lennart, 1006 Lausanne (CH)
(74) Representative: Lomholt, Stig Bredsted
(86) International application number: PCT/EP2017/052438
(87) International publication number: WO 2017/134253

(56) References cited:
- WO-A1-2014/023805
- CA-A- 1 046 836
- US-A1- 2012 288 611
- LI S ET AL: "Whipped powdery non-dairy cream extremely convenient to store, transport and use, comprises raw materials comprising hydrogenated vegetable oil, syrup, white sugar, stabilizer, emulsifier, milk powder, salt and sodium caseinate", WPI / THOMSON,, vol. 2013, no. 31, 16 January 2013 (2013-01-16), XP002711615,

## Description

### FIELD OF THE INVENTION

The present invention relates to creamer compositions and to processes for producing creamer compositions.

### BACKGROUND TO THE INVENTION

Creamers are widely used as whitening agents with hot and cold beverages such as, for example, coffee, cocoa, tea, etc. They are commonly used in place of milk and/or dairy cream. Creamers may come in a variety of different flavours and provide mouthfeel, body, and a smooth texture. Creamers can be in liquid or powder forms.

Both consumers and health authorities seek nutritionally balanced foods and beverages with reduced calorie content. In addition, many consumers look for enhanced mouthfeel, also denoted as richness, texture or creaminess, of foods and beverages. At the same time, many foods and beverages are transitioning from high fat and high sugar versions to versions with reduced fat and reduced sugar content in order to limit the calorie content.

However, a reduction in fat and/or sugar content can result in a less pleasing mouthfeel. Emulsified fat contributes considerably to the in-mouth textural quality of a food or beverage, typically enhancing body (thickness), smoothness and/or mouthcoating, all of which are sensory attributes that describe a creaminess sensation.

However, by reducing fat content, for example in a beverage, in order to reduce the overall calorie content, the characteristic of creaminess can be lost, resulting in a product that is perceived by consumers as being watery, thin, weak, diluted and/or low quality. Additionally, the perception of aroma released from a beverage or food product may be reduced when fat content is reduced.

Creamers, such as non-dairy creamers, may use casein or a salt thereof, e.g. sodium caseinate, as a protein component. The sodium caseinate functions as an emulsifier to stabilise the oil component in the creamer. The amount of sodium caseinate present in the creamer is a balance between the need to emulsify the oil component of the creamer, and the need to avoid undesirable coagulation of protein in the beverage to which the creamer is added. In order to obtain good emulsion stability, the sodium caseinate is typically present in the creamer in an amount between 6% and 45%, calculated in percentage on the total oil+emulsifier amount in the system. In CA1046836 a powdered creamer composition is described in which the sodium caseinate (NaCas) percentage is between 7% (3% NaCas for 40% fat in the powder) and 43% (15% NaCas for 20% fat in the powder).

US2012/288611 discloses a liquid creamer having a specific combination of a gum component, a protein, an emulsifier system, and an oil.

CN102870895 discloses a whipped powdery non-dairy cream. The lowest ratio of sodium caseinate to oil is 0.036:1.

WO2014/023805 discloses oil-in-water emulsions which may be in the form of creamers. The oil-in-water emulsions comprise deamidated protein as emulsifier.

There is therefore a need in the art for a means to enhance the mouthfeel and perceived creaminess of foods and/or beverages without increasing the overall fat content, as well as means for improving the perception of aroma released from food and/or beverages, especially when fat content is reduced.

### SUMMARY OF INVENTION

The present invention solves the above prior art problems by providing creamer compositions as described in the claims.

By a creamer composition is meant a composition that is intended to be added to a food and/or beverage composition, such as e.g. coffee, tea or soup, to impart specific characteristics such as colour (e.g. whitening effect), thickening, flavour, texture, and/or other desired characteristics. A creamer composition of the invention is in powdered form.

Advantageously, the creamer compositions of the invention produce a creamy layer on top of a beverage or liquid food product, which provides an improved mouthfeel and creaminess perception by the consumer, without increasing the overall fat content of the beverage or liquid food product, and/or increases the perception of aroma released from the beverage or liquid food product. This is achieved by lowering the amount of casein or salt thereof present in the creamer relative to the amount of lipid component.

In one aspect, the invention provides a creamer composition, said composition comprising casein or a salt thereof and an oil wherein the weight ratio of casein or salt thereof to oil is 0.005:1 to 0.035:1, preferably 0.010:1 to 0.030:1; preferably 0.012:1 to 0.028:1, more preferably 0.015:1 to 0.025:1, the composition comprises 0.20 wt.% to 0.80 wt.% casein or salt thereof, and the creamer composition is provided in the form of a powder.

The casein or salt thereof component of the creamer composition may be selected from: micellar casein, sodium caseinate, potassium caseinate and calcium caseinate; preferably the casein or salt thereof is sodium caseinate.

The oil component of the creamer composition may be an oil selected from: palm oil, palm kernel oil or olein, hydrogenated palm kernel oil or olein, coconut oil, algal oil, canola oil, soy bean oil, sunflower oil, safflower oil, cotton seed oil, milk fat, and corn oil.

The creamer composition may comprise a sweetener (for example, a sugar), sodium chloride, a buffer, and/or a low molecular weight emulsifier.

In one embodiment, the creamer composition of the invention does not comprise a low molecular weight emulsifier.

The creamer composition may comprise 10 wt.% to 80 wt.% oil; preferably 10 wt.% to 50 wt.% oil, more preferably 15 wt.% to 40 wt.% oil; and even more preferably 20 wt.% to 35 wt.% oil.

In one embodiment, the creamer composition of the invention is obtainable by a process comprising the steps of (i) adding a gas under high pressure into the composition, preferably wherein the gas is nitrogen, and (ii) drying, e.g. spray drying, the composition.

The creamer composition of the invention may be a beverage creamer, preferably a coffee creamer.

In another aspect, the invention provides the use of the creamer composition of the invention herein to form a creamy layer on top of a beverage, wherein the creamy layer comprises a plurality of oil droplet aggregations.

In one embodiment, 25 wt.% to 80 wt.% of the oil component of the composition is present in the creamy layer; preferably 45 wt.% to 80 wt.%; for example 45 wt.% to 65 wt.%.

In another aspect, the invention provides a coffee beverage composition comprising the creamer composition of the invention and a coffee component, preferably a dried coffee component.

In one embodiment, upon reconstitution of the coffee beverage composition in water at a temperature of at least 70°C to form a coffee beverage a creamy layer is formed on top of the beverage, wherein the creamy layer comprises a plurality of oil droplet aggregations; preferably wherein 25 wt.% to 80 wt.% of the oil component of the composition is present in the creamy layer; for example 45 wt.% to 65 wt.%.

In a further aspect, the invention provides a process for providing a dried creamer composition of the invention, said process comprising the steps of:
(i) providing an aqueous phase comprising casein or a salt thereof;
(ii) providing an oil phase comprising an oil, and optionally a low molecular weight emulsifier;
(iii) combining the aqueous phase and the oil phase to form a pre-emulsion;
(iv) homogenising the pre-emulsion to form an emulsion concentrate;
(v) optionally adding a gas under high pressure into the emulsion concentrate, wherein the gas is N₂, CO₂, Air or N₂O, preferably N₂.
(vi) drying, e.g. spray drying, the emulsion concentrate to form a dried creamer composition.

### DESCRIPTION OF FIGURES

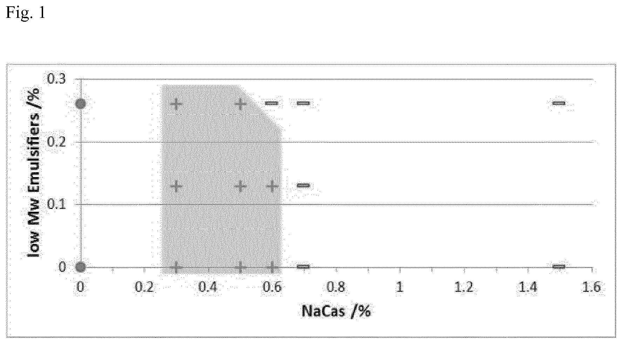

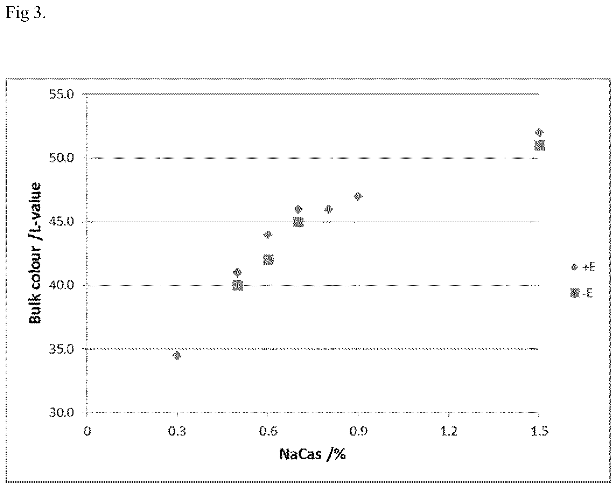

Figure 1 - Sodium caseinate (NaCas) concentration plotted against low molecular weight emulsifier concentration for a number of example beverages comprising creamer reconstituted with dried coffee into hot water. The sodium concentration is given as percentage in the creamer concentrate (has a total solid content of 60%). The formulation space where a creamy layer is formed in the final product is indicated by the grey shading. The used water was Vittel "Bonne Source, France" (contains 94 mg/L Ca²⁺ and 20 mg/L Mg²⁺ (in total 114 mg/L Ca²⁺ and Mg²⁺).
(+): cream layer formation;
(-): no or only small droplet aggregates are formed, no cream layer formed within 30 minutes;
(•): too much droplet aggregation occurring leading to an unstable emulsion concentrate during homogenization and spray drying.

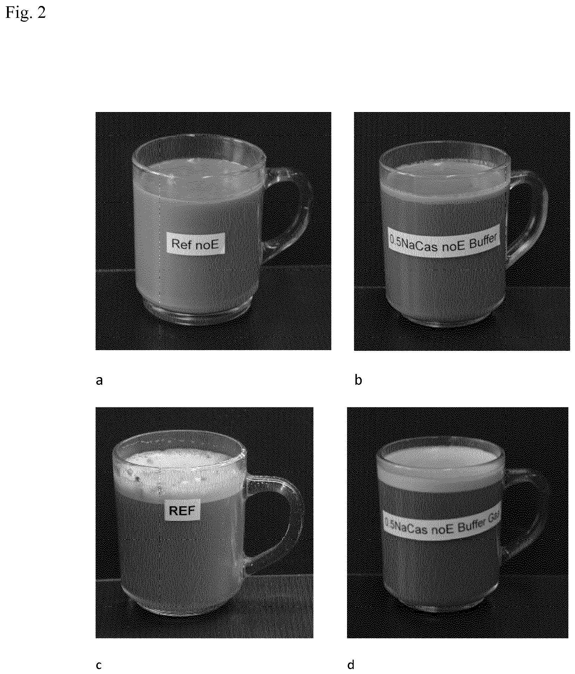

Figure 2 - Visual appearance of non-gassed (a, b) and gassed (c, d) finished samples;
   3a: non-gassed reference (no cream layer formed); 3b: non-gassed with a cream layer (contains 0.5% NaCas, no low molecular weight emulsifier (E) added); 3c: gassed reference (no cream layer, only foam layer); 3d: gassed with creamy foam layer (containing 0.5% NaCas; no E) Reconstituted with Vittel Bonne Source water; NaCas-% concentration given as percentage in concentrate formulation. E: Monoglycerides
Figure 3 - Colour measurements in bulk phase of finished coffee beverage as a function of the NaCas content in the system; after decanting the foam layer; NaCas-% concentration given as percentage in concentrate formulation; reconstituted with Vittel "Bonne Source, France" water at 85°C.

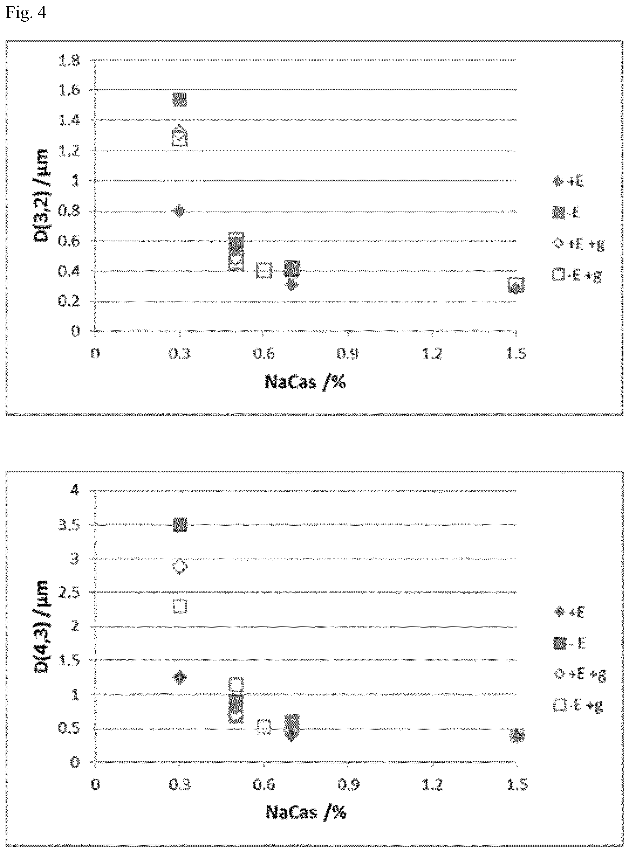

Figure 4 - Malvern Mastersizer data of creamer concentrates (60% total solid); the evolution of the D(3,2) (a measure of the mean size of single oil droplets) and the D(4,3) (measure of the mean size of the formed droplet aggregates) when reducing the NaCas content in concentrate. Vittel "Bonne Source, France" used as water source.

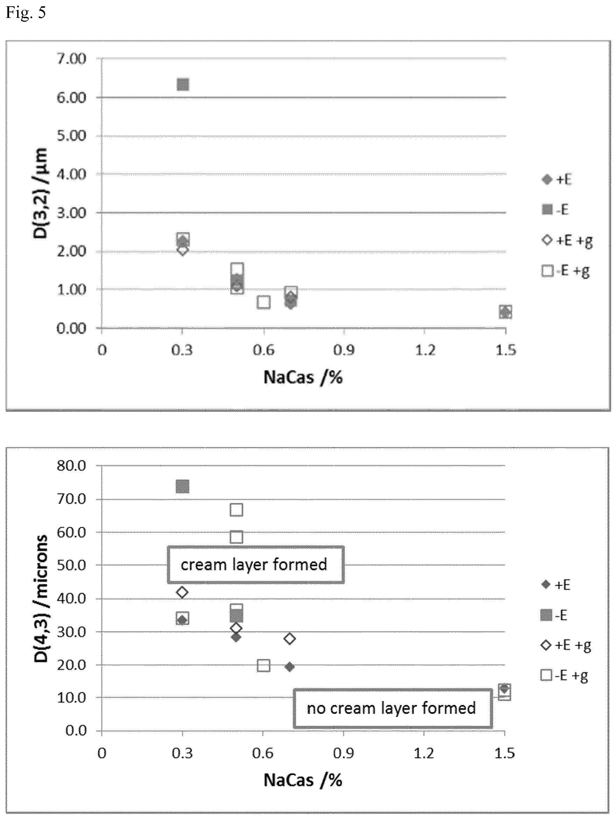

Figure 5 - D(3,2) and D(4,3) values of final product, i.e., measured after spray drying of the creamer concentrate and then reconstitution into hot coffee. Vittel "Bonne Source, France" used as water source.

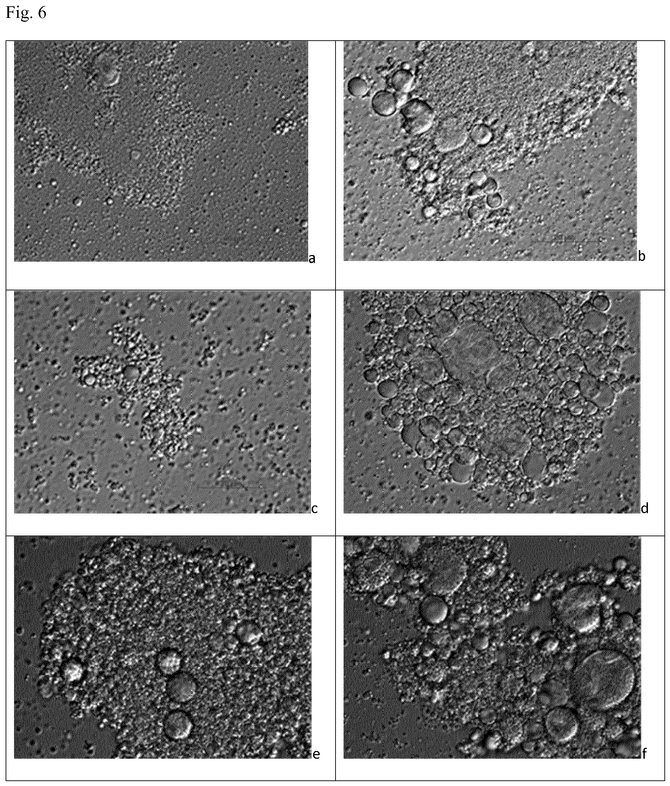

Figure 6 - Microscopic images after reconstitution of the creamer powder into hot coffee: a: 1.5% NaCas +E; b: 0.7% NaCas + E; c: 0.5% NaCas + E; d: 0.5% NaCas + E + gas; e: 0.3% NaCas + E; f: 0.3% NaCas + E + gas (NaCas amounts given on the base of the respective concentration in the creamer concentrate); E: Emulsifier, i.e. Monoglycerides; gas: aerated samples, Vittel "Bonne Source, France" used as water source.

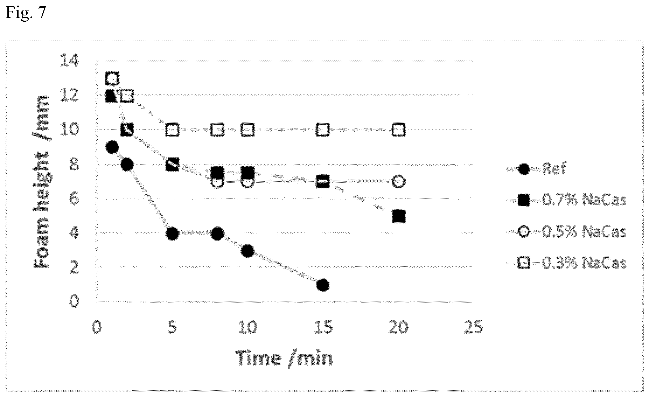

Figure 7 - The relationship between foam layer height and NaCas concentration (given as percentage in creamer concentrate). Gassed creamer with low molecular weight emulsifier, reconstituted at 85°C. Vittel "Bonne Source, France" used as water source.

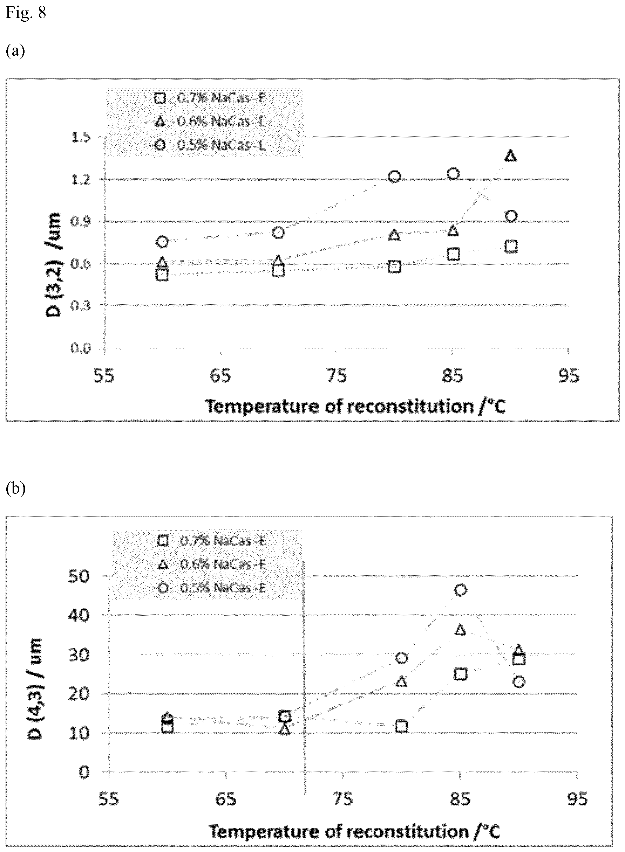

Figure 8 - Impact of reconstitution temperature on foam layer volume; gassed creamer, no low molecular weight emulsifiers. (a) D(3,2) measurement; (b) D(4,3) measurement. Vittel "Bonne Source, France" used as water source. NaCas concentration given as percentage in creamer concentrate).

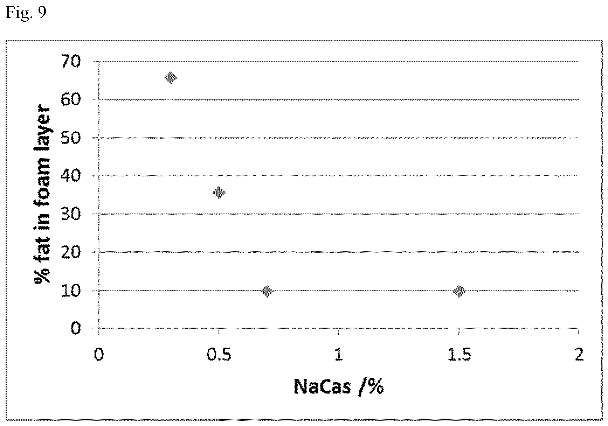

Figure 9 - Fat content in the foam layer after reconstitution of the creamer powders into hot coffee as a function of NaCas in the system (given as percentage in concentrate); Aerated (gassed) samples, no low molecular weight (LMW) emulsifiers present; after 2-5 minutes after reconstitution, Vittel "Bonne Source, France" used as water source.

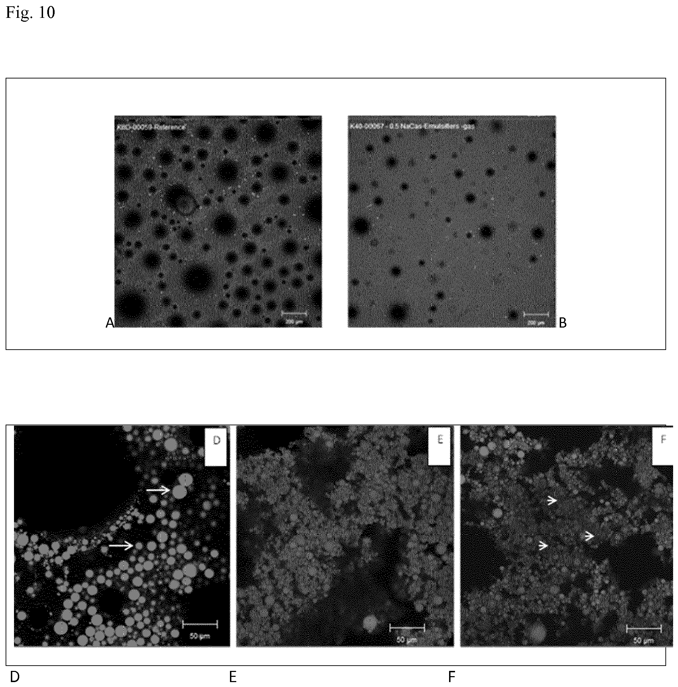

Figure 10 - Confocal images gas overlaid samples: A: Reference foam layer; 1.5% NaCas + LMW emulsifiers in system; B: creamy foam layer; 0.5% NaCas + LMW emulsifiers in system. Overlap of Nile Red (stains fat globules) and Fast Green (stains proteins) channel. Scale bars: 200 µm. Confocal images of gassed samples at higher magnification: D: Reference system; E: 0.5% NaCas + E, F: NaCas no E. Scale bars: 50 µm. Vittel "Bonne Source, France" used as water source. NaCas concetration given as percentage in creamer concentrate.

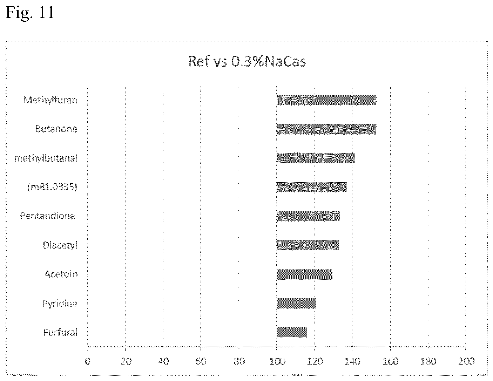

Figure 11 - Percentage of aroma compounds release from creamy foam layer (0.3% NaCas; (given on concentrate)) compared to the reference system (1.5% NaCas (given on concentrate))A value larger than 100% means that the measured release of the respective aroma compound is larger from the creamy foam layer than the release from the foam layer in the reference system.

### DETAILED DESCRIPTION

Unless otherwise stated, weight percentage values (wt.% or %) described herein are given with respect to the wt.% of the stated ingredient in a powder creamer composition.

The present invention provides in one aspect a creamer composition, said composition comprising casein or a salt thereof and an oil wherein the weight ratio of casein or salt thereof to oil is 0.005:1 to 0.035:1, preferably 0.010:1 to 0.030:1; preferably 0.012:1 to 0.028:1, more preferably 0.015:1 to 0.025:1.

The creamer composition is capable of forming a creamy layer, preferably a creamy foam layer, on top of a beverage or liquid food product, wherein the creamy layer comprises a plurality of oil droplet aggregations.

The weight ratio of casein or salt thereof to oil may be about 0.005:1, 0.006:1, 0.007:1, 0.008:1, 0.009:1, 0.010:1, 0.011:1, 0.012:1, 0.013:1, 0.014:1, 0.015:1, 0.016:1, 0.017:1, 0.018:1, 0.019:1, 0.020:1, 0.021:1, 0.022:1, 0.023:1, 0.024:1, 0.025:1, 0.026:1, 0.027:1, 0.028:1, 0.029:1, 0.030:1, 0.031:1, 0.032:1, 0.033:1, 0.034:1 or 0.035:1.

In one aspect, the function of the casein or salt thereof component of a creamer is to emulsify and thus stabilise the oil component of the creamer when added to a liquid food or a beverage.

The present inventors have surprisingly found that by reducing the amount of casein or salt thereof present in the creamer relative to the oil component, such that the weight ratio of casein or salt thereof to oil in the creamer composition falls within the range of about 0.005:1 to about 0.035:1, the creamer advantageously produces a creamy layer at the top of a liquid food (for example a soup) or a beverage (for example tea or coffee). The creamy layer contains a high proportion of the total oils present in the creamer. Accordingly, the creamy layer produced by the creamer composition of the invention provides for an improved mouthfeel compared to that produced by a regular (prior art) creamer, providing increased perception of creaminess, thus improving the taste and perception of a liquid food or a beverage.

Advantageously, the creamy layer produced by the creamer composition of the invention provides increased mouthfeel and creaminess perception without the need for increasing the total fat content compared to the use of a regular creamer, and without the need for the addition of hydrocolloids or other mouthfeel-enhancing ingredients. The presence of the creamy layer has also been found to increase the perception of aroma released from the product to which the creamer is added.

As a further advantage, the reduction in the use of casein or salt thereof in the creamer also provides cost benefits in manufacturing.

Furthermore, use of the creamer of the invention in coffee beverages enables the production of coffees with a desirable "homemade" or "artisanal" and less "processed" appearance.

Without wishing to be bound by theory, the present inventors believe that the creamy layer produced by the creamers of the invention is formed from oil droplets that form aggregates and rise to the top of the liquid food or beverage due to their reduced density compared to the aqueous component of the liquid food or beverage. The inventors have surprisingly found that by reducing the concentration of casein or salt thereof present in the creamer at a constant oil content, the reduction in emulsification of oil droplets provides for increased oil droplet aggregation and the formation of the creamy layer in the final product.

Advantageously, the presence of the creamy layer increases the concentration of oil at the top of the liquid food or beverage, which provides for the increased perception of creaminess by the consumer.

The weight ratio of casein or salt thereof to oil component in the creamer is important to the formation of the creamy layer. If too much casein or salt thereof is present compared to the oil component, then there is no aggregation of the oil droplets in the final product and the creamy layer will not form. However, if the concentration of casein or salt thereof is too low, then excessive oil droplet aggregation and/or coalescence will destabilise the emulsion during homogenization and emulsion concentrate formation and/or drying of the concentrate, preventing the formation of a creamy layer after reconstitution in the final product.

Casein is a protein that may be found in mammalian milk. Casein and casein salts are commonly used in a variety of food products. The casein or salt thereof described herein may comprise α-casein, β-casein and/or γ-casein.

The casein or salt thereof used in the creamer composition of the invention may be micellar casein, sodium caseinate, potassium caseinate or calcium caseinate; preferably the casein or salt thereof is sodium caseinate. While casein and salts thereof are derived from a milk protein, when used in food products they are typically not regarded as a true dairy substance, due to having undergone processing. Accordingly, creamers comprising casein or a salt thereof such as sodium caseinate may be described as non-dairy creamers.

The oil component of the creamer may be an oil such as palm oil, palm kernel oil or olein, hydrogenated palm kernel oil or olein, coconut oil, algal oil, canola oil, soy bean oil, sunflower oil, safflower oil, cotton seed oil, milk fat, or corn oil, or high oleic variants of oils such as high oleic soybean, high oleic canola, high oleic safflower, or high oleic sunflower oil.

The creamer composition is in the form of a powder. The powder may be obtained by drying of a liquid creamer concentrate. The drying step may be performed by spray drying, vacuum band drying, roller drying or freeze drying. In a preferred embodiment, the powder is obtained by spray drying.

In spray drying, a liquid is sprayed through a small nozzle into a heated drying gas. This produces a dried powder or particles which can subsequently be collected. Spray drying methods are known in the art and would be familiar to a skilled person.

The creamer composition of the invention may contain one or more further components, such as, for example, a sweetener (e.g. a sugar), sodium chloride, a buffer and/or a low molecular weight emulsifier or flavours. In a preferred embodiment, the oil comprises one or more added aroma components. By an added aroma component is meant an aroma or flavour component which is not naturally part of the oil. For example, if the creamer is intended to be used with coffee, coffee aroma and/or flavour may be added to the oil to increase the perceived coffee aroma and/or flavour of the final beverage.

A sweetener, such as a sugar (e.g. glucose), provides a desired sweet taste when the creamer is added to a liquid food or a beverage. As an alternative to sugar, an artificial sweetener may be used.

Sweeteners can include, for example, sucrose, fructose, dextrose, maltose, dextrin, levulose, tagatose, galactose, corn syrup solids and other natural or artificial sweeteners. Sugarless sweeteners can include, but are not limited to, sugar alcohols such as maltitol, xylitol, sorbitol, erythritol, mannitol, isomalt, lactitol, hydrogenated starch hydrolysates, and the like, alone or in combination. Usage level of the sweeteners will vary and will depend on such factors as potency of the sweetener, desired sweetness of the product and cost considerations. Combinations of sugar and/or sugarless sweeteners may be used. In one embodiment, a sweetener is present in the creamer composition of the invention at a concentration ranging from about 5-90% by weight of the total composition, such as in the range 20-90%, preferably such as 20-70%. In another embodiment, the sweetener concentration ranges from about 40% to about 60% by weight of the total composition. If an artificial sweetener is used, it is suitably combined with bulking agents such as maltodextrins and polydextrose.

The creamer composition of the invention may comprise a buffer and stabilizing agents. The buffer and stabilizing agent can prevent undesired creaming or precipitation of the creamer upon addition into a hot, acidic environment such as coffee. Examples of suitable buffers and stabilizing agents include monophosphates, diphosphates, triphosphates, hexamethaphosphates, sodium mono- and bicarbonates, potassium mono- and bicarbonates, or a combination thereof. Preferred buffers and stabilizing agents are salts such as potassium phosphate, dipotassium phosphate (also known as potassium phosphate dibasic), potassium hydrophosphate, sodium bicarbonate, sodium citrate, sodium phosphate, disodium phosphate, sodium hydrophosphate, sodium tripolyphosphate and hexametaphosphates. The buffer and stabilizing agents may be present in an amount of about 0.1 to about 3% by weight of the creamer composition.

The creamer composition of the invention may comprise a low molecular weight emulsifier. A low molecular weight emulsifier may be an emulsifier with a molecular weight below 1500 g/mol. The term low molecular weight emulsifier as defined herein does not include casein or casein salts.

Examples of low molecular weight emulsifiers include monoglycerides, diglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, diacetylated tartaric acid esters of monoglycerides, lecithins, lysolecithins, succinic acid esters of mono- and/or diglycerides, lactic acid esters of mono- and/or diglycerides, lecithins, lysolecithins, proteins and sucrose esters of fatty acids, lecithin (e.g. soy lecithin, canola lecithin, sunflower lecithin, and/or safflower lecithin), lysolecithins, and combinations thereof.

The low molecular weight emulsifier may be present in the composition in an amount of, for example, about 0.1 wt.% to about 0.5 wt.%.

However, the inventors have determined that low molecular weight emulsifiers are not essential for the creamer compositions of the invention. Thus, a creamer composition of the invention may lack any low molecular weight emulsifier.

An example formulation of a powder creamer composition according to the invention is presented in Table 1.

**Table 1 - Example powder creamer composition.**

| | Wt.% in final powder |
|---|---|
| Stabilizing & buffer salts | 2.5 |
| Sodium chloride | 0.2 |
| Sodium caseinate | 0.8 |
| Water | 3.0 |
| Glucose syrup | 59.1 |
| Palm oil | 33.9 |
| Monoglycerides [LMW emulsifier] | 0.5 |

The creamer composition comprises 0.20 wt.% to 0.80 wt.% casein or salt thereof.

The creamer composition may comprise about 0.40 wt.%, 0.45 wt.%, 0.50 wt.%, 0.55 wt.%, 0.60 wt.%, 0.65 wt.%, 0.70 wt.%, 0.75 wt.%, 0.80 wt.% casein or salt thereof.

The creamer composition may comprise 10 wt.% to 80 wt.% oil, for example 10 wt.% to 50 wt.%, 20 wt.% to 40 wt.%, or 20 wt.% to 35 wt.%.

The creamer composition may comprise 10, 15, 20, 25, 30, 35, 40, 50 or 80 wt.% oil.

In one embodiment, the creamer composition of the present invention is in the form of a powder obtainable by a process comprising the steps of (i) adding a gas under high pressure into the composition, and (ii) drying (e.g. spray drying) the composition to form a powder. Preferably the gas is nitrogen. Other suitable gases include carbon dioxide (CO₂), nitrous oxide (N₂O), and air. Creamers obtainable by such a process may be referred to as "gassed".

The gas may be added under high pressure into a liquid concentrate creamer. In one embodiment, wherein the drying is spray drying, the gas is preferably added at a pressure of 20-50 bars above the spraying pressure directly before the spraying step.

Advantageously, when such a gassed creamer composition is added to a liquid food or a beverage, bubbles of the gas are released which migrate to the top of the beverage to form a foam within the creamy layer, producing a creamy foam layer. The inventors have discovered that the production of a creamy foam layer stabilizes the foam aspect of the layer and provides improved mouthfeel and increased perception of creaminess, beyond that created by the creamy layer on its own or a foam layer on its own.

Without wishing to be bound by theory, the inventors believe that the gas in a gassed creamer is held in void structures in the dried powder, enabling it to be released when the powder is added to a liquid food or a beverage.

Methods for adding a gas into a composition as described above are known in the art.

The creamer composition of the invention may be a beverage creamer, for example a coffee creamer. Beverage creamers are commonly used as a substitute for milk to whiten beverages such as tea or coffee.

As described above, the creamer composition of the invention may be used to form a creamy layer on top of a liquid food or a beverage. The creamy layer comprises a plurality of oil droplet aggregations. In certain embodiments, the creamy layer may be a creamy foam layer, formed by the presence of gas bubbles. They can be released from the creamer composition or another ingredient in the recipe that contains gas.

The creamy layer formed by the creamer composition of the invention comprises a significant proportion of the total amount of oil present in the creamer, in the form of oil droplets in the creamy layer. As it is the presence of oil in the creamy layer that increases the perception of creaminess, this property of the creamer compositions can advantageously provide improved texture properties without increasing the overall fat content of the liquid food or beverage.

In one embodiment, up to about 25% to about 80% by weight of the oil component of the composition may be present in the creamy layer; preferably about 45% to about 80% by weight; for example about 45% to about 65%.

The oil droplet aggregates in the creamy layer may have, for example, a mean size of about 20 µm to about 40 µm. Mean size is determined as D(4,3), the volume weighted mean aggregate size. Particle size measurements may be carried out using a Malvern Mastersizer with a Hydro 2000G dispersion unit.

In addition to the above, use of a creamer composition of the invention in a beverage such as coffee has the effect of decreasing the whiteness of the bulk phase of the beverage below the creamy layer. This phenomenon is caused by the increased movement of oil droplets from the bulk phase to the creamy layer, leading to a darkening of the bulk phase and a pleasing aesthetic appearance of the beverage.

The creamer composition may be combined with coffee (for example a dried coffee such as dried instant coffee powder) to form a coffee beverage composition. Thus, in one aspect, the invention provides a coffee beverage composition comprising the creamer composition of the invention and a coffee component. For example, when the coffee beverage composition is reconstituted in water at a temperature of at least 70°C (for example, about 70°C to about 95°C, or about 80°C to about 90°C; or about 70, 75, 80, 85 or 90°C) a coffee beverage with a creamy layer on top of the beverage is formed, the creamy layer comprising a plurality of oil droplet aggregations. When the creamer is a gassed creamer as described above, gas bubbles released from the creamer enable the formation of a creamy foam layer.

A dried creamer composition of the present invention may be formed by a process comprising the steps of:
(i) providing an aqueous phase comprising casein or a salt thereof;
(ii) providing an oil phase comprising an oil, and optionally a low molecular weight emulsifier;
(iii) combining the aqueous phase and the oil phase to form a pre-emulsion;
(iv) homogenising the pre-emulsion to form an emulsion concentrate;
(v) optionally adding a gas under high pressure into the emulsion concentrate, preferably wherein the gas is nitrogen; and
(vi) drying (e.g. spray drying) the emulsion concentrate to form a dried creamer composition.

The process may comprise a step of pasteurizing or commercially sterilising the pre-emulsion or emulsion concentrate. The pasteurizing step may, for example, be performed at a minimum temperature of at least 81°C for at least 5 seconds.

The aqueous phase may be prepared by adding the casein or salt thereof, and optionally other water soluble ingredients such as, for example, a sweetener, sodium chloride, flavours, aromas and/or a buffer, to water and mixing.

The oil phase may be prepared using the oil component of the composition and optionally combining this with low molecular weight emulsifiers. If an added oil soluble aroma and/or flavour component in the oil is desired, it may be added and mixed into the oil before the oil is combined with the aqueous phase.

The aqueous phase and the oil phase may be combined, for example, at a temperature of about 60°C to about 80°C, for example about 60, 65, 70, 75 or 80°C, to form a pre-emulsion.

The pre-emulsion may be homogenised at high pressures using protocols known in the art. By way of example, the pre-emulsion may be homogenised using two runs at a pressure of 250/50 bars. Alternatively, the pre-emulsion may be homogenised using three runs at pressures of 300 bars for two runs and 50 bars for a third run.

The term "homogenise" or "homogenised" is a unit operation using a class of processing equipment referred to as homogenisers that are geared towards reducing the size of droplets in liquid-liquid dispersions. Examples of homogenisers may include high speed blender, high pressure homogenisers, Colloid Mill, high shear dispersers, ultrasonic disruptors, and membrane homogenisers.

Subsequently, the obtained emulsion concentrate is dried (for example, by spray drying), optionally following a gas addition step under high pressure (e.g. wherein the drying is spray drying, at approximately 20 to 50 bars above the spraying pressure).

It should be noted that embodiments and features described in the context of one of the aspects of the present invention also apply to other aspects of the present invention.

The invention will now be described in more detail by way of the following non-limiting examples.

### EXAMPLES

Except where stated otherwise, in the following Examples wt.% values for sodium caseinate (abbreviated to NaCas) are given based on its percentage in a liquid concentrate creamer. Such a liquid concentrate may be spray dried to form a powder creamer composition.

Table 2 below provides example values of sodium caseinate wt.% in liquid concentrates and in the corresponding dried powder, for both reference creamers and example creamers (figures in italics) of the invention.

**Table 2**

| % sodium caseinate content, calculated on creamer concentrate (60% total solids) | % sodium caseinate content, calculated on powder creamer formulation |
|---|---|
| 1.5 | 2.37 |
| 1.2 | 1.90 |
| 0.9 | 1.42 |
| *0.7* | *1.12* |
| *0.5* | *0.79* |
| *0.3* | *0.47* |

### Example 1

Preparation of a creamer composition in the form of a liquid concentrate (outside the scope of the claims as such).

Water was boiled and added to the dry mixed water soluble ingredients under vigorous magnetic agitation. Agitation continued until no lumps were visible anymore. The aqueous phase was kept warm for 1 hour at 75°C in a water bath equipped with magnetic agitation.

Palm oil was thawed in a 300 ml heat resistant beaker at a temperature of at least 55°C, or in a microwave for three minutes at 800W) until totally liquid. It was kept in a water bath at 75°C.

The low molecular weight emulsifiers. E.g. the monoglycerides were mixed into the liquid oil under magnetic agitation until total dissolution was observed.

The glucose syrup was weighted in 600 ml Pyrex beakers and heated to 75°C in the water bath and mixed with the other water soluble ingredients using a magnetic stirrer until a homogenous mixture was obtained after approximately five minutes.

A pre-emulsion was formed by adding the oil phase into the aqueous phase at 75°C. The pre-emulsion was kept under gentle agitation for 3-5 minutes and pre-homogenized using a Polytron for 1 minute at speed 3.

Then the mixture was homogenized using a pre-heated (hot water) Niro 2 homogenizer at 2 runs and a pressure of 250/50bars. As alternative, a Rannie homogenizer may be used (2 runs 300 bars, 1run 50 bars).

The obtained emulsion concentrates were kept at room temperature and shaken before usage.

### Example 2

A liquid creamer concentrate as produced using the process described in Example 1 was run through a high pressure pump.

Nitrogen gas was injected into the liquid concentrate at high pressure (20 to 50 bars above the spraying pressure).

The liquid concentrate was subjected to spray drying.

The resultant powder was then further dried and cooled to form a powder creamer composition as follows:

| | Weight in grams in final powder |
|---|---|
| Stabilizing and buffer salts | 2.5 |
| Sodium chloride | 0.2 |
| Sodium caseinate | 0.8 |
| Water | 3.0 |
| Glucose syrup | 59.1 |
| Palm oil | 33.9 |
| Monoglycerides [LMW emulsifier] | 0.5 |

### Example 3

### Preparation of example beverages

Coffee was chosen as an example beverage. The beverages were prepared as follows: 13.5g powder creamer, 3g instant coffee powder and 14g sucrose were dispersed into 180g hot Vittel "Bonne Source France" water (85°C).

Sodium caseinate concentrations (given relative to the liquid concentrate) which produce a creamy layer are shown in Figure 1. Formation of a creamy layer is shown by the grey shading. The operating parameters in which the cream layer is formed after reconstitution into hot coffee and Vittel "Bonne Source France" water (contains 114 mg/L Ca²⁺ and Mg²⁺) is between 0.25% and 0.6% NaCas, calculated on the 60% TS (total solids) creamer concentrate, or between 0.40% and 0.96% calculated on the creamer powder.

Figure 1 plots sodium caseinate concentration against low molecular weight emulsifier concentration, and it can be seen that the presence of low molecular weight emulsifiers is not required for the formation of a creamy layer.

It has further been found that when the water used to reconstitute the creamer has Ca²⁺ and Mg²⁺ concentrations higher than about 114 mg/L, the upper sodium caseinate concentration limit where the creamy layer is formed is slightly increased by about 0.1 to 0.2 units wt.%.

### Visual appearance of controlled aggregation in example beverage

Four different coffee preparations were compared:
(a) Reference creamer, non-gassed;
(b) Example creamer of the invention, non-gassed;
(c) Reference creamer, gassed;
(d) Example creamer of the invention, gassed.

"Gassed" refers to creamers to which nitrogen gas has been added, as described above.

The creamers had compositions as follows:

| | Weight in grams in final powder | |
|---|---|---|
| | Reference creamer | Example creamer |
| Stabilizing and Buffer salts | 2.5 | 2.5 |
| Sodium chloride | 0.2 | 0.2 |
| Sodium caseinate | 2.4 | 0.8 |
| Water | 3.0 | 3.0 |
| Glucose syrup | 57.5 | 59.1 |
| Palm oil | 33.9 | 33.9 |
| Monoglycerides [LMW emulsifier] | 0.5 | 0.5 |

The appearance of the four coffee preparations is shown in Figure 2.

Coffee (a) lacked any creamy layer, while a creamy layer was present at the top of coffee (b). A non-creamy foam layer was present at the top of coffee (c), while a creamy foam layer was present at the top of coffee (d). In addition, the presence of a creamy layer was also correlated with a decrease in whiteness of the bulk phase of the beverage below the cream or foam layer. This is due to an increase in the number of oil droplets moving from the bulk phase to the creamy layer.

### Example 4

Impact of controlled aggregation on colour of liquid phase.

Droplet creaming to the top induces a depletion of oil droplets in the bulk phase and a reduction of the sodium caseinate in the system. As already qualitatively shown above, the consequence is a darker colour in the coffee bulk phase (Figure 3). The change in colour as a function of the sodium caseinate content was quantified using the HunterLab colour measurement. The L-value significantly decreases with decreasing NaCas content confirming the decrease in whiteness in the bulk coffee phase. NaCas and oil droplets are known to mainly contribute to the whiteness appearance in coffee beverages. Figure 3 shows also that the observed effect was independent of the presence or absence of the low molecular weight emulsifiers Monoglycerides. The gas bubbles also do not contribute significantly to the whiteness of the beverage (data not shown).

The whiteness of reconstituted coffee mix samples was measured at room temperature using a Color Flex 45/0 color meter (HunterLab Reston, Virginia, USA). A cuvette was filled with 40 ml of a sample aliquot and the color measurement was taken on reflectance mode, with D65 daylight illuminant at a 10°C viewing angle against a black background. Three measurements were taken for each sample aliquot; the data were averaged.

### Example 5

Oil droplet diameter after homogenisation and before drying.

Measuring the mean particle size after homogenization allowed characterization of the properties of the creamer concentrate before spray drying. Figure 4 shows the evolution of the D(3,2) (a measure of the mean size of single oil droplets) and the D(4,3) (a measure of the mean size of the formed droplet aggregates) when reducing the NaCas content. The D(3,2) value increased with reducing the sodium caseinate content, especially when going below 0.7% NaCas, indicating that below 0.7% NaCas the surface activity of the NaCas starts to be reduced (effect of reducing the NaCas concentration).

A similar effect was observed for D(4,3). It is approximately constant between 1.5% and 0.7% NaCas. Since the D(3,2) and the D(4,3) values are quite similar in size it can be concluded that only relatively small aggregates are formed in the concentrates when reducing the NaCas content below 0.7%. Even at 0.3% NaCas there is still enough NaCas present in the system to emulsify the fat and form a stable concentrated creamer emulsion. Figure 4 shows also that droplet sizes are not significantly influenced by the presence of the low molecular weight emulsifiers Monoglycerides, and by the presence of gas bubbles in the system.

In Figure 5 the D(3,2) and D(4,3) values are given measured after spray drying and reconstitution into hot coffee. It can be seen that the obtained D(3,2) values are quite similar to those obtained in the concentrates (Fig. 4). This indicates that the properties of the emulsion droplets in the concentrates are not significantly changed during the spray drying and reconstitution processes. However, the D(4,3) values are significantly higher (up to 20 times) in the coffee after reconstitution when compared to the values obtained for the creamer concentrate before spray drying. This indicates that significant droplet aggregation is induced only after reconstitution of the creamer powder with hot coffee. Again droplet aggregation is not influenced by the presence of the low molecular weight emulsifiers and/or gas bubbles. Taking all the data obtained in this work together it can be concluded that when the aggregate mean size in the system is above approximately 30 µm (±5-10 µm), a macroscopic creamy layer is usually observable within 2-5 minutes after reconstitution. This indicates that under such conditions the aggregates are large enough to cream within the desired time frame.

Light microscopy images (see Figure 6) confirm the formation of extensive oil droplet aggregates after reconstitution into hot coffee. The less NaCas present, the larger the formed aggregates. Images a & d and e & f compare respective non-gassed vs gassed systems.

Particle size measurements were done using a Malvern Mastersizer with a Hydro 2000G dispersion unit. The creamer concentrates or the reconstituted coffee mixes were poured directly in the dispersion unit. Sample was added until an obscuration of around 9-11 was reached, with one minute of dispersion prior to the measurement.

Instrument set up:
o Palm & Coconut RI: 1.45, Absorption 0.01
o Dispersant: Water RI 1.33, Absorption 0.01
o Result calculation: general purpose spherical enhanced sensitivity
o Measurement time 12s, Snaps 12000
o Background time 12s, Snaps 12000
o Pump: 850 RPM
o Stirrer 780 RPM
o Pre-measurement time: 1min
o Cycle: 1 aliquot/SOP
o measurements/aliquot delay 30s

The results were expressed as D(3,2), the surface weighted mean size (µm) that gives an indication of the mean size of single oil droplets (or small aggregates (including sodium caseinate aggregates)), and as D(4,3), the volume weighted mean aggregate size (µm) that reflects the mean size of the formed oil droplet aggregates.

Light microscopy (Differential Interference Contrast (DIC)) images were taken using a Zeiss Axioplan microscop (Carl Zeiss A.G, Germany). The concentrated emulsions are diluted 100 times with Vittel CH water prior to observation. Either 40 or 100 magnification was used.

### Example 6

### Mixed oil/foam layer stability

When forming foam layers in the presence of aggregated and creaming oil droplets, the foam layer properties are unique. The following describes the exceptional properties of the "creamy foam layer", such as its physical stability, microstructure and fat content.

### Evolution of foam layer height with time

Reducing the sodium caseinate content in the system increased the initial height (volume) of the formed foam layer. This observation points to the incorporation of part of the cream layer leading to a stabilization of the foam layer with time. Figure 7 shows that the reference foam layer is much less stable than the foam layer formed in the presence of droplet aggregates, i.e., at lower NaCas concentration (< 0.7 NaCas concentration (on concentrate)). In the 0.3% NaCas system the foam layer is most stable and decreases its height in a time frame of 20 minutes only slightly. The aggregated oil droplets are most probably responsible for the increased foam layer stability.

### Impact of reconstitution temperature and salt on foam layer volume

Oil droplet aggregation is highest when reconstituting the coffee mixes with water at a temperature between 80°C and 90°C. This means oil droplet aggregation and, as a consequence, cream layer formation is significantly less below 70°C reconstitution temperature. This is most probably linked to the fact that the sodium caseinate forms reversible aggregates with increasing temperatures, inducing an increased and faster aggregation of the oil droplets due to the presence of less molecularly dissolved sodium caseinate. It seems that the caseinate sub-micelles are less surface active than the molecularly dissolved caseinate molecules, contributing to the reversible aggregation of oil droplets.

Reconstitution of the coffee mixes was performed using Vittel "Bonne Source France" water at a temperature of 80-85°C.

Figure 8 shows the development of the mean single droplet and aggregate size as a function of temperature in more details. The increase in the D(3,2) is with all likelihood linked to the formation of small casein sub-micelles at higher temperatures.

### Example 7

### Fat presence in foam layer - lipid analysis

The lipid analysis of the foam layers and their adjacent bulk phases revealed that up to 65% of the oil from the creamer component was incorporated into the foam layer (in the presence of 0.3% NaCas) (Figure 9). Significant fat incorporation, was observed at NaCas concentrations lower than 0.7%. At higher NaCas concentrations the incorporated fat content was reduced. It is remarkable that the incorporated fat is not destabilizing but, on the contrary, stabilizing the foam layer. The fact that the creamer fat is enriched in the foam layer justifies the denotation "creamy foam layer".

### Fat presence in foam layer - Confocal microscopy

Inspection of the Confocal microscopy images give a qualitative answer to the question why the incorporated fat into the creamy foam layer is destabilizing the structure of the foam bubbles much less than in the reference foam layer. The gas bubbles in the creamy foam layer are smaller compared to the bubbles in the reference sample. Moreover, in the reference sample the oil droplets accumulate more at the bubble interface, surrounding the gas bubbles, whereas in the creamy foam layer system this is much less observed. This means that in the creamy foam layer the fat droplets are much less associated with the gas bubbles destabilizing the bubbles in a much lesser extent than in the reference foam layer. This indicates that when fat globules are aggregated they are much less associated with gas bubbles and, as a consequence, destabilize the bubbles to a much lesser degree.

In Figure 10 images are taken with a higher magnification and using Nile red staining only focusing on the state of the oil droplets. Again larger individual oil droplets (see arrows) are observed in the reference foam layer (image D) as compared to the creamy foam layers (images E & F). At this higher magnification, differences can also be observed within the two creamy foam layer forming samples E & F. Whereas in the image E (contains monoglycerides) no 'bright' fat droplets are observed and a 'cloudy structure' is dominant, in image F (no monoglycerides present) some 'bright' oil droplets are visible. With all likelihood 'bright' fat droplets are suggesting the presence of single relative large oil droplets, while a 'cloudy reddish structure' is pointing to a situation where sub-micron sized single oil droplets are forming aggregates.

In conclusion, Confocal images confirm that the measured physical differences in the reference and the creamy foam layer can be related to observed differences in the foam microstructure.

The fat content in the foam layer was determined using the SMART Trac system which is a low resolution NMR system manufactured by CEM corp, Matthews, USA. The samples are prepared as follows: 13.5 g creamer & 3 g of coffee were reconstituted in 180 ml Vittel "Bonne Source France" water at 85°C. The beverage was stirred until complete dissolution.

For the analysis of the fat in the foam/cream layer the layer was separated from the beverage with a spoon and put in a plastic cup. Before analysis the material was mixed as much as possible to get a homogeneous dispersion. The material was analyzed following using Majonnier fat analysis method. For the analysis of the fat content in the liquid beverage phase, the material was taken out of the cup using a pipette and analyzed.

### Example 8

### Coffee mix beverages

Creamer samples were prepared according to the following base recipe (% by weight in dry matter), for the specific samples the maltodextrin content was adapted to make up for 100%:

| | |
|---|---|
| - Glucose syrup / maltodextrin: | 58.5% |
| - Fat | 35% |
| - Sodium caseinate | 2.5% |
| - Salts | 3.5% |
| - Stabilizers / emulsifiers | 0.5% |

The samples were produced by mixing an aqueous phase (water containing salts) and an oil phase (fat containing stabilizers and flavours), dissolving maltodextrin therein and creating a homogeneous emulsion using a Rannie homogenizer (2 passes at 300 bar, 1 pass at 50 bar).

The following samples were produced:

### With anhydrous milk fat:

**Sample A** was prepared with a fat mix of 30% Fully Hydrogenated Palm Kernel Oil (FHPKO) and 5% anhydrous milk fat using 2.5% sodium caseinate to create a stable emulsion
**Sample B** was prepared with a fat mix of 30% FHPKO and 5% anhydrous milk fat using 0.8% sodium caseinate in order to create an aggregating and creaming emulsion
**Sample C** was used as reference (35% FHPKO) with 0.8% sodium caseinate in order to create a creaming emulsion.

### With milk and coffee flavours:

**Sample D** was prepared according the base recipe while adding 1.6 % milk flavour (Firmenich 508111 TP1904) and 0.6% coffee flavour (Firmenich 565652 4TP1104) using 2.5% sodium caseinate in order to generate a stable emulsion.
**Sample E** was prepared according the base recipe while adding 1.6 % milk flavour (Firmenich 508111 TP1904) and 0.6% coffee flavour (Firmenich 565652 4TP1104) using 0.8% sodium caseinate in order to create an aggregating and creaming emulsion
**Sampl**e **F** was used as reference (35% FHPKO) with 0.8% sodium caseinate in order to create a creaming emulsion.

### With aromatized coffee oil:

**Sample G** was prepared according the base recipe while adding 1.2 % coffee oil containing coffee flavour using 2.5% sodium caseinate in order to generate a stable emulsion.
**Sample H** was prepared according the base recipe while adding 1.2 % coffee oil containing coffee flavour using 0.8% sodium caseinate in order to create an aggregating and creaming emulsion
**Sample I** was used as reference (35% FHPKO) with 0.8% sodium caseinate in order to create a creaming emulsion.

This liquid creamer concentrates were used to prepare coffee mix beverages, each beverage contained 12 g creamer (on dry matter basis), 2.5 g Nescafé coffee powder and 150 g water.

The impact of oil droplet aggregation and flavour addition on sensory perception was evaluated in three randomized double-blind tasting sessions with 9 panellists, focusing on flavour intensity, mouthfeel and persistence. Per tasting three samples were presented for evaluation:
- Stable creamer emulsion containing 2.5% (on dry weight basis (dwb)) sodium caseinate and flavour
- Aggregated creamer emulsion containing 0.8% (dwb) sodium caseinate and flavour
- Aggregated creamer emulsion containing 0.8% (dwb) sodium caseinate and no flavour Rating scheme: 1 = highest, 2 = intermediate, 3 = lowest.

Ratings obtained from all panellists were recorded and averaged to obtain a numerical value per category (mouthfeel, flavour and aroma). Lower numbers indicate better scores.

The results are shown in the tables below:

### With anhydrous milk fat:

| | **A: non agg + flavor** | **B: agg + flavor** | **C: agg but no flavor** |
|---|---|---|---|
| **Aroma** | 1.94 | 1.47 | 1.88 |
| **Mouthfeel** | 2.06 | 1.25 | 2.69 |

### With milk and coffee flavors:

| | **D: non agg + flavor** | **E: agg + flavor** | **F: agg but no flavor** |
|---|---|---|---|
| **Mouthfeel** | 1.94 | 1.17 | 2.89 |
| **Flavor** | 2.11 | 1.28 | 2.64 |
| **Aroma** | 1.56 | 1.56 | 2.89 |

### With aromatized coffee oil:

| | **G: non agg** + **flavor** | **H: agg** + **flavor** | **I: agg but no flavor** |
|---|---|---|---|
| **Creaminess (mouthfeel)** | 3.00 | 1.67 | 1.33 |
| **Aroma** | 1.78 | 1.72 | 2.50 |

### Example 9:

### Cream Layer Formation boosts Aroma Release

Coffee mixes were prepared in a 100ml polystyrene plastic cup by adding 70ml of hot Vittel water (Bonne Source; heated up to 80°C) to a coffee creamer powder mix that additionally contained two purchased flavour mixes. The dispersion was stirred to ensure good dispersion of the powders. After a short time (1-5 minutes), a cream layer appeared for creamer powder products containing a low sodium caseinate content (e.g 0.47%). This was not the case when using a creamer that contained 2.37% sodium caseinate. In this case no cream layer was formed. All cups were then placed in a water bath held at 50°C to cool down from 80°C and to maintain the temperature before aroma release experiments were executed.

The base composition of the reference creamer was

| | |
|---|---|
| - Glucose syrup / maltodextrin: | 58.5% |
| - Fat | 35% |
| - Sodium caseinate | 2.5% |
| - Salts | 3.5% |
| - Stabilizers / emulsifiers | 0.5% |

The base composition of the creamer of this invention was:

| | |
|---|---|
| - Glucose syrup / maltodextrin: | 60.5% |
| - Fat | 35% |
| - Sodium caseinate | 0.5% |
| - Salts | 3.5% |
| - Stabilizers / emulsifiers | 0.5% |

The breath by breath aroma compounds released through the nose after coffee mixes consumption were measured using a PTR-ToF-MS 8000 Instrument from Ionicon Analytik GmbH (Innsbruck/Austria). Lab glasses with an individually adapted glass nosepiece, which fit nostrils without discomforting the panelist and letting the mouth free during eating/drinking, was connected to the PTR-ToF-MS inlet line to sample exhaled air of the panelist.

The drift tube parameters from PTR-ToF-MS were fixed as follow: Pressure drift at 3.3 mbar, temperature drift at 80°C and voltage drift at 600V. Mass spectra were acquired at a scan speed of 108ms of the mass range from 0 to 250m/z. The inlet line was heated at 100°C and the inlet flow was at 200ml/min.

The Aroma compounds that were followed are listed below (concentration higher than 1ppbV).

| Compounds | Exact mass | Lipophilicity (logP) (EPI Suite) |
|---|---|---|
| Diacetyl | 87.0804 | -1.34 |
| Pentanedione | 101.0597 | -0.85 |
| Butanone | 73.0645 | 0.29 |
| Furfural | 97.0284 | 0.83 |
| Methylbutanal | 87.0804 | 1.23 |
| Methylfuran | 83.0491 | 1.91 |
| Acetoin | 89.0284 | -0.36 |
| Pyridine | 80.0495 | 0.8 |
| Unknown C5H4O | 81.0335 | na |

For the data treatment, the PTR-MS Viewer 3.1 software was used. The mass axis was recalibrated with two ions, m/z 21.0221 (H₃O¹⁸⁺) and m/z 29.9971 (NO⁺) generated in the ion source. The response of the targeted masses was integrated and calculated in absolute concentration (ppbV). A homemade application developed on Matlab was used to extract area under the curve parameters.

Eight panelists participated in the study. Each sample was consumed in four consecutive sips with one breath in between each sip. The panelists were asked to breath-in and breath-out every 3s by following a signal given by a light. Eight panelists tested a reference sample (made out of a reference creamer and soluble coffee reconstituted into hot water) and a sample of this invention (made out of the creamer of this invention and soluble coffee reconstituted into hot water) in triplicates and drunk four sips per sample.

Collected data were analyzed using Analysis of Variance (ANOVA) and the Duncan multiple comparison procedure was applied to assess the significance of the difference between any pair of products. A 95% confidence level was applied for all tests.

Aroma release during consumption of the two samples described above was measured to evaluate the effect of oil droplet aggregation and cream layer formation.

The coffee mixes prepared with creamers containing a low sodium caseinate amount (conditions of oil droplet aggregation and cream layer formation) showed an enhanced aroma release compared to coffee mixes prepared with a reference creamer at 2.5% sodium caseinate (no oil droplet aggregation or cream layer formation). Fig 11 shows the percentage of released aroma compounds in the sample of this invention compared to the reference sample (coffee beverage containing the creamer made with 2.5% NaCas). The release of six out of nine aroma compounds (methylfuran, butanone, methylbutanal, m81.0335, pentandione and diacetyl) was statistically different from the reference system (at p=0.05). This means an increased release of these components could be measured indicating that the overall aroma perception of the two systems is different.

### Example 10

### Vegetable soups with creamer

Powdered creamers were prepared according to the following base recipe:

| | |
|---|---|
| - Glucose syrup / maltodextrin: | 58% |
| - FHPKO | 33.5% |
| - Sodium caseinate | 2.5% |
| - Salts & stabilizers | 2.7% |
| - Water | 3.0% |

FHPKO: fully hydrogenated palm kernel oil.

The creamers were produced by mixing and homogenizing the dry ingredients in water to produce an emulsion concentrate which was spray dried to produce a creamer powder. In some cases a foaming creamer was produced by injecting nitrogen into the emulsion just before spray drying.

For specific samples the sodium caseinate content vas varied as described below.

### Carrot soup

A carrot soup was prepared from the following ingredients:

| **Soup base ingredients** | Amount /in g |
|---|---|
| carrots | 1000 |
| potato | 300 |
| onions | 100 |
| leek | 100 |
| celery | 40 |
| salt | 15 |
| pepper | 2 |
| water | 2500 |

The vegetables were cut, added to boiling water and cooked for 30 minutes, after which the soup was pureed and strained.

Samples of soup with creamer were prepared by heating 100 ml of soup to 80°C and adding 13.3 g of creamer powder. The final soup contained about 4% fat in total. A reference creamer powder contained 2.4% sodium caseinate (NaCas). Creamer powders of the invention contained 0.8% NaCas or 0.5% NaCas, all creamers were non-foaming.

Reducing the NaCas content in the creamer as compared to the reference clearly induced, within a few minutes, the formation of a significant cream layer which had an orange colour indicating the presence of 'extracted' carotenoids from the carrots in the soup. This orange cream layer was largest in the soup with the lowest NaCas content (0.5% in the creamer powder).

Similar experiments were performed with the same soup using foaming creamers of similar composition. When using an aerated creamer a foam layer is observed very quickly after preparation. When reducing also the NaCas content to 0.5% as compared to 2.4% in the reference, an orange cream layer is formed in addition to the foam layer. The observation that the foam layer gets slightly orange in the presence of the creamer of the invention shows that the carotenoids are partially dissolved into the fat droplet and their aggregates that are also partly incorporated into the foam layer, which is not the case for the soup containing the reference creamer.

Light microscopy showed that the cream layer formation was due to oil droplet aggregation in the final product, whereas in the reference system no significant oil droplet aggregation was visible.

## Claims

1. A creamer composition, said composition comprising casein or a salt thereof and an oil, wherein the weight ratio of casein or salt thereof to oil is 0.005:1 to 0.035:1, preferably 0.010:1 to 0.030:1; preferably 0.012:1 to 0.028:1, more preferably 0.015:1 to 0.025:1,
the composition comprises 0.20 wt.% to 0.8 wt.% casein or salt thereof, and the composition is in the form of a powder.

2. A creamer composition according to any preceding claim, wherein the casein or salt thereof is selected from: micellar casein, sodium caseinate, potassium caseinate and calcium caseinate; preferably wherein the casein or salt thereof is sodium caseinate.

3. A creamer composition according to any preceding claim, wherein the oil is selected from: palm oil, palm kernel oil or olein, hydrogenated palm kernel oil or olein, coconut oil, algal oil, canola oil, soy bean oil, sunflower oil, safflower oil, cotton seed oil, milk fat, and corn oil.

4. A creamer composition according to any preceding claim, wherein the composition comprises a sweetener, e.g. sugar, a buffer and/or stabilizing agent, and/or a low molecular weight emulsifier.

5. A creamer composition according to any preceding claim, wherein the composition does not comprise a low molecular weight emulsifier and/or a buffer and stabilizing agent.

6. A creamer composition according to any preceding claim, wherein the composition comprises 10 wt.% to 80 wt.% oil; preferably 10 wt.% to 50 wt.%, more preferably 15 wt.% to 40 wt.%, even more preferably 20 wt.% to 35 wt.%.

7. A creamer composition according to any preceding claim, wherein the composition is in the form of a powder obtainable by a process comprising the steps of (i) adding a gas under high pressure into the composition, preferably wherein the gas is nitrogen, and (ii) drying the composition to form a powder.

8. A creamer composition according to any preceding claim, wherein the oil comprises one or more added aroma components.

9. Use of a creamer composition according to any one of claims 1 to 8 to form a creamy layer on top of a beverage, wherein the creamy layer comprises a plurality of oil droplet aggregations.

10. Use according to claim 9, wherein 25% to 80% of the oil component of the composition is present in the creamy layer; preferably 45% to 80%.

11. A coffee beverage composition comprising the composition of any one of claims 1 to 8 and a coffee component, preferably a dried coffee component.

12. A coffee beverage composition according to claim 11, wherein upon reconstitution of the coffee beverage composition in water at a temperature of at least 70°C to form a coffee beverage a creamy layer is formed on top of the beverage, wherein the creamy layer comprises a plurality of oil droplet aggregations; preferably wherein 25% to 80% of the oil component of the composition is present in the creamy layer, preferably 45% to 80%.

13. A process for providing a dried creamer composition according to any one of claims 1 to 8, said process comprising the steps of:
(i) providing an aqueous phase comprising casein or a salt thereof;
(ii) providing an oil phase comprising an oil, and optionally a low molecular weight emulsifier;
(iii) combining the aqueous phase and the oil phase to form a pre-emulsion;
(iv) homogenising the pre-emulsion to form an emulsion concentrate;
(v) optionally adding a gas under high pressure into the emulsion concentrate, preferably wherein the gas is nitrogen; and
(vi) drying the emulsion concentrate to form a dried creamer composition.

## Patentansprüche

1. Weißerzusammensetzung, wobei die Zusammensetzung Casein oder ein Salz davon und ein Öl umfasst, wobei das Gewichtsverhältnis von Kasein oder einem Salz davon zu Öl 0,005:1 bis 0,035:1, vorzugsweise 0,010:1 bis 0,030:1; vorzugsweise 0,012:1 bis 0,028:1, mehr bevorzugt 0,015:1 bis 0,025:1 beträgt, wobei die Zusammensetzung zu 0,20 Gew.-% bis 0,8 Gew.-% Kasein oder ein Salz davon umfasst und die Zusammensetzung in Form eines Pulvers vorliegt.

2. Weißerzusammensetzung nach einem der vorstehenden Ansprüche, wobei das Kasein oder Salz davon ausgewählt ist aus: mizellarem Kasein, Natriumkaseinat, Kaliumkaseinat und Kalziumkaseinat; wobei das Kasein oder Salz davon vorzugsweise Natriumkaseinat ist.

3. Weißerzusammensetzung nach einem der vorstehenden Ansprüche, wobei das Öl ausgewählt ist aus: Palmöl, Palmkernöl oder Olein, hydriertem Palmkernöl oder Olein, Kokosnussöl, Algenöl, Canolaöl, Sojaöl, Sonnenblumenöl, Safloröl, Baumwollsamenöl, Milchfett und Maisöl.

4. Weißerzusammensetzung nach einem der vorstehenden Ansprüche, wobei die Zusammensetzung ein Süßungsmittel, z. B. Zucker, einen Puffer und/oder ein Stabilisierungsmittel und/oder einen Emulgator mit geringem Molekulargewicht umfasst.

5. Weißerzusammensetzung nach einem der vorstehenden Ansprüche, wobei die Zusammensetzung keinen Emulgator mit geringem Molekulargewicht und/oder keinen Puffer und kein Stabilisierungsmittel umfasst.

6. Weißerzusammensetzung nach einem der vorstehenden Ansprüche, wobei die Zusammensetzung zu 10 Gew.-% bis 80 Gew.-%; vorzugsweise zu 10 Gew.-% bis 50 Gew.-%, mehr bevorzugt zu 15 Gew.-% bis 40 Gew.-%, noch mehr bevorzugt zu 20 Gew.-% bis 35 Gew.-% Öl umfasst.

7. Weißerzusammensetzung nach einem der vorstehenden Ansprüche, wobei die Zusammensetzung in Form eines Pulvers vorliegt, das durch ein Verfahren erhältlich ist, das folgende Schritte umfasst: (i) Hinzufügen eines Gases unter hohem Druck in die Zusammensetzung, wobei das Gas vorzugsweise Stickstoff ist, und (ii) Trocknen der Zusammensetzung zum Bilden eines Pulvers.

8. Weißerzusammensetzung nach einem der vorstehenden Ansprüche, wobei das Öl eine oder mehrere hinzugefügte Aromakomponenten umfasst.

9. Verwendung einer Weißerzusammensetzung nach einem der Ansprüche 1 bis 8 zum Bilden einer cremigen Schicht auf einem Getränk, wobei die cremige Schicht eine Vielzahl von Öltröpfchenansammlungen umfasst.

10. Verwendung nach Anspruch 9, wobei 25 % bis 80 % der Ölkomponente der Zusammensetzung; vorzugsweise 45 % bis 80 %; in der cremigen Schicht.

11. Kaffeegetränk-Zusammensetzung, die die Zusammensetzung nach einem der Ansprüche 1 bis 8 und eine Kaffeekomponente, vorzugsweise eine getrocknete Kaffeekomponente, umfasst.

12. Kaffeegetränk-Zusammensetzung nach Anspruch 11, wobei beim Wiederherstellen der Kaffeegetränk-Zusammensetzung in Wasser bei einer Temperatur von mindestens 70 °C zum Bilden eines Kaffeegetränks eine cremige Schicht auf dem Getränk gebildet wird, wobei die cremige Schicht eine Vielzahl von Öltröpfchenansammlungen umfasst; wobei vorzugsweise 25 % bis 80 % der Ölkomponente der Zusammensetzung, vorzugsweise 45 % bis 80 %, in der cremigen Schicht vorhanden sind.

13. Verfahren zum Bereitstellen einer getrockneten Weißerzusammensetzung nach einem der Ansprüche 1 bis 8, wobei das Verfahren folgende Schritte umfasst:
(i) Bereitstellen einer wässrigen Phase, die Kasein oder ein Salz davon umfasst;
(ii) Bereitstellen einer Ölphase, die ein Öl und wahlweise einen Emulgator mit geringem Molekulargewicht
umfasst;
(iii) Kombinieren der wässrigen Phase und der Ölphase zum Bilden einer Voremulsion;
(iv) Homogenisieren der Voremulsion zum Bilden eines Emulsionskonzentrats;
(v) wahlweise Hinzufügen eines Gases unter hohem Druck in das Emulsionskonzentrat, wobei das Gas vorzugsweise Stickstoff ist; und
(vi) Trocknen des Emulsionskonzentrats zum Bilden einer getrockneten Weißerzusammensetzung.

## Revendications

1. Composition de succédané de crème, ladite composition comprenant de la caséine ou un sel de celle-ci et une huile, dans laquelle le rapport pondéral de la caséine ou du sel de celle-ci à l'huile va de 0,005:1 à 0,035:1, de préférence 0,010:1 à 0,030:1 ; de préférence 0,012:1 à 0,028:1, plus préférablement 0,015:1 à 0,025:1, la composition comprend 0,20 % en poids à 0,8 % en poids de caséine ou d'un sel de celle-ci, et la composition est sous la forme d'une poudre.

2. Composition de succédané de crème selon une quelconque revendication précédente, dans laquelle la caséine ou le sel de celle-ci est choisi parmi : caséine micellaire, caséinate de sodium, caséinate de potassium et caséinate de calcium ; de préférence dans laquelle la caséine ou le sel de celle-ci est le caséinate de sodium.

3. Composition de succédané de crème selon une quelconque revendication précédente, dans laquelle l'huile est choisie parmi : huile de palme, huile ou oléine de palmiste, huile ou oléine de palmiste hydrogénée, huile de coco, huile d'algale, huile de canola, huile de soja, huile de tournesol, huile de carthame, huile de graines de coton, matières grasses de lait, et huile de maïs.

4. Composition de succédané de crème selon une quelconque revendication précédente, dans laquelle la composition comprend un édulcorant, par exemple du sucre, un agent tampon et/ou stabilisant, et/ou un émulsifiant à faible masse moléculaire.

5. Composition de succédané de crème selon une quelconque revendication précédente, dans laquelle la composition ne comprend pas d'émulsifiant à faible masse moléculaire et/ou d'agent tampon et stabilisant.

6. Composition de succédané de crème selon une quelconque revendication précédente, dans laquelle la composition comprend 10 % en poids à 80 % en poids d'huile ; de préférence 10 % en poids à 50 % en poids, plus préférablement 15 % en poids à 40 % en poids, encore plus préférablement 20 % en poids à 35 % en poids.

7. Composition de succédané de crème selon une quelconque revendication précédente, dans laquelle la composition est sous la forme d'une poudre pouvant être obtenue par un procédé comprenant les étapes consistant à (i) ajouter un gaz sous pression élevée dans la composition, de préférence dans laquelle le gaz est de l'azote, et (ii) sécher la composition pour former une poudre.

8. Composition de succédané de crème selon une quelconque revendication précédente, dans laquelle l'huile comprend un ou plusieurs composants d'arôme ajoutés.

9. Utilisation d'une composition de succédané de crème selon l'une quelconque des revendications 1 à 8 pour former une couche crémeuse au-dessus d'une boisson, dans laquelle la couche crémeuse comprend une pluralité d'agrégats de gouttelettes d'huile.

10. Utilisation selon la revendication 9, dans laquelle 25 % à 80 % du composant huileux de la composition est présent dans la couche crémeuse ; de préférence 45 % à 80 %.

11. Composition de boisson au café comprenant la composition selon l'une quelconque des revendications 1 à 8 et un composant de café, de préférence un composant de café séché.

12. Composition de boisson au café selon la revendication 11, dans laquelle lors d'une reconstitution de la composition de boisson au café dans de l'eau à une température d'au moins 70 °C pour former une boisson au café une couche crémeuse est formée au-dessus de la boisson, dans laquelle la couche crémeuse comprend une pluralité d'agrégats de gouttelettes d'huile ; de préférence dans laquelle 25 % à 80 % du composant huileux de la composition est présent dans la couche crémeuse, de préférence 45 % à 80 %.

13. Procédé pour fournir une composition de succédané de crème séchée selon l'une quelconque des revendications 1 à 8, ledit procédé comprenant les étapes consistant à :
(i) fournir une phase aqueuse comprenant de la caséine ou un sel de celle-ci ;
(ii) fournir une phase huileuse comprenant une huile, et éventuellement un émulsifiant à faible masse moléculaire ;
(iii) combiner la phase aqueuse et la phase huileuse pour former une pré-émulsion ;
(iv) homogénéiser la pré-émulsion pour former un concentré d'émulsion ;
(v) éventuellement ajouter un gaz sous pression élevée dans le concentré d'émulsion, de préférence dans lequel le gaz est de l'azote ; et
(vi) sécher le concentré d'émulsion pour former une composition de succédané de crème séchée.
